# EUROPEAN PATENT APPLICATION

(11) **EP 1 844 639 A1**
(43) Date of publication of application: **17.10.2007**
(21) Application number: 07007301.0
(22) Date of filing: 10.04.2007
(51) Int. Cl.: A01C 23/00

(54) **Apparatus for distributed discharge of a medium displaceable by a pump, in particular liquid manure**

(30) Priority: 10.04.2006 NL 1031551
(71) Applicant: AGRO-INVENT B.V. i.o., 8308 RT Nagele (NL)
(72) Inventor: Capelle, Adriaan Cornelis, 8308 RT Nagele (NL)
(74) Representative: Bartelds, Erik

(57) **Abstract**

The invention relates to an apparatus for distributed discharge of liquid manure from a container (2), provided with a tubular distributing member (8) which is to be connected to the container, which has one or more inflow openings (9) and a number of outflow openings (10) distributed in its lengthwise direction, and at least one movable member (16) co-acting with the distributing member for closing one or more outflow openings.

The closing member (16) can have a cross-sectional form corresponding to that of the distributing member (8), can be arranged co-axially in or round a part of the distributing member (8), and can have one or more dispensing openings (17) for bringing into register with the outflow openings (10).

The invention further relates to an installation for distributed discharge of liquid manure, comprising a mobile container arranged on a chassis and a discharge apparatus as described above connected thereto.

## Description

The invention relates to an apparatus for distributed discharge of a medium displaceable by a pump, in particular liquid manure, from a container filled with this medium. Such apparatuses are very widely known.

The oldest known discharge apparatuses comprise an outflow conduit connected to the container - usually a mobile liquid manure tank placed on a chassis - and a spreader plate placed some distance therebehind. In these apparatuses a jet of manure flows out of the container through the outflow conduit and strikes the plate with force, whereby the manure bursts apart in a curtain or fan and is thus spread over the ground transversely of the direction of travel of the container. As a result of stricter environmental requirements this type of discharge apparatus is less used nowadays.

Another known type of discharge apparatus is provided with a cylindrical distributor head which is connected to a feed conduit from the container. A rotating member is usually accommodated in this distributor head, whereby the manure is distributed and possible solids are decreased in size. The distributor head has a number of peripherally distributed outflow openings to which are connected hoses which lead to outlet pipes. These outlet pipes are arranged in a frame extending behind the container transversely of the direction of travel. Distributed in transverse direction, the manure is thus applied to the land in this way.

The known discharge apparatus has the drawback that the distribution which can be achieved therewith is not optimal. The outlet pipes situated close to the middle of the frame will be supplied with more manure than those on the outer ends. Furthermore, when the discharge apparatus is switched on and off at the beginning and the end of a field, the feed to the outer outlet pipes will start later and finish sooner than that to the central pipes, thereby creating a conical discharge pattern. As a result of the presence of a distributor head with rotating distributing member, the construction of the discharge apparatus is further rather complicated.

The invention now has for its object to provide a discharge apparatus of the above described type wherein said drawbacks do not occur, or do so at least to a lesser extent. According to the invention this is achieved in such a discharge apparatus by at least one tubular distributing member which is to be connected to the container and which has at least one inflow opening and a number of outflow openings distributed in its lengthwise direction, and at least one movable member co-acting with the distributing member for at least partially closing one or more outflow openings. By making use of a tubular distributing member having outflow openings distributed in lengthwise direction the medium can be discharged over the whole length of the distributing member in uniformly distributed manner. The closing member co-acting with the distributing member ensures that the outflow openings can be opened or closed as required, preferably even simultaneously. All outflow openings can hereby be opened at the beginning of an operating run so that a uniformly distributed quantity of medium is discharged straightaway. The outflow openings can likewise be closed again simultaneously at the end of an operating run.

Preferred embodiments of the discharge apparatus according to the invention are described in the dependent claims.

The invention also relates to an installation for distributed discharge of a medium displaceable by a pump, in particular liquid manure, comprising a mobile container arranged on a chassis and a discharge apparatus of the above described type connected thereto.

The invention is now elucidated on the basis of a number of embodiments, wherein reference is made to the accompanying drawing in which corresponding components are designated with reference numerals increased by "100" at a time and in which:
Fig. 1 is a schematic rear view of the discharge apparatus according to the invention,
Fig. 2 is a detail view according to arrow II in fig. 1 of a part of a distributing member and a closing member pivotable therein,

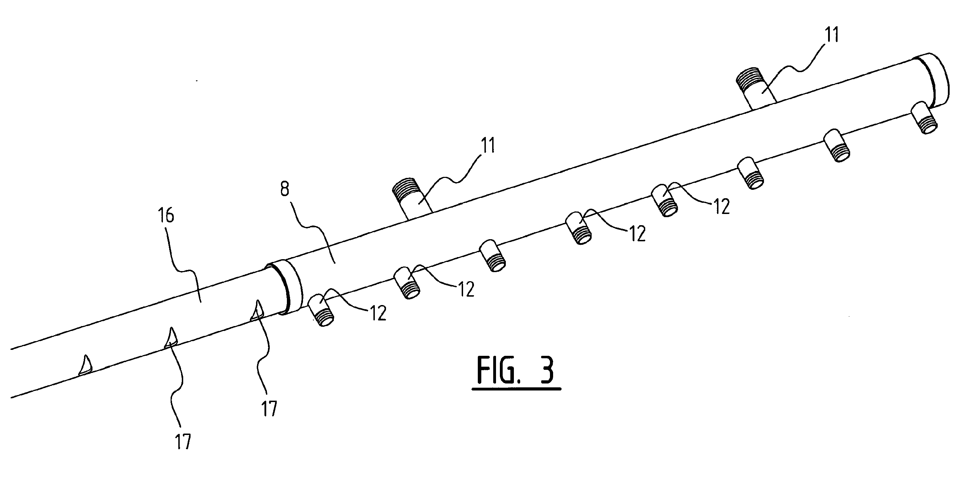

Fig. 3 is a perspective view of a distributing member with closing member in dismantled state,
Fig. 4 is a perspective view of the closing member of fig. 3 from another angle,
Fig. 5 is a perspective detail view of the closing member from another side, in which a recess for the feed can be seen,
Fig. 6 shows a detail view of a variant wherein the closing member is slidable relative to the distributing member,
Fig. 7A to 7C show schematically the relative position of an outflow opening and the associated dispensing opening,
Fig. 8 shows a perspective view of an alternative embodiment of the closing member,
Fig. 9 shows a cross-section through a distributing member with the closing member of fig. 8 therein,
Fig. 10 is a perspective rear view of an alternative embodiment of the discharge apparatus which is combined with a ground working apparatus, and
Fig. 11 is a perspective front view of a part of the discharge apparatus and ground working apparatus of fig. 10.

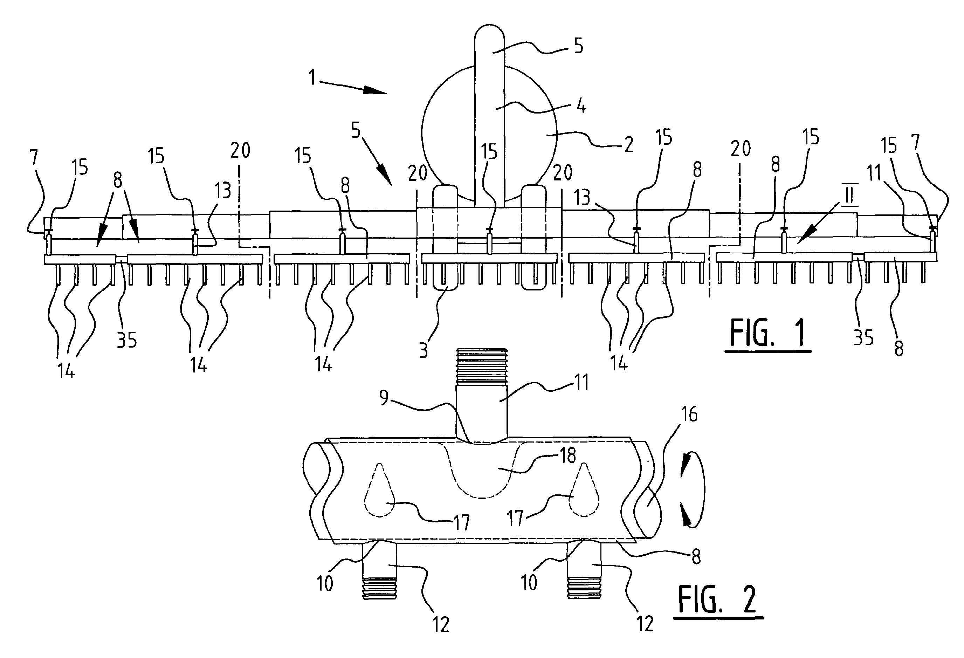

An installation 1 for distributed discharge of a medium displaceable by a pump, in particular liquid manure, comprises a container 2 which is filled with this medium and which is arranged on a chassis 3 and is therefore mobile (fig. 1). A feed conduit 4 runs from container 2 to a discharge apparatus 5.

Discharge apparatus 5 comprises a central supply member 6 which in the shown embodiment takes the form of a tube with a diameter decreasing toward its ends 7. Connected to supply member 6 is a number of - here seven - distributing members 8, each taking the form of a tube with an inflow opening 9 and a number of outflow openings 10 in distributed arrangement. Formed round inflow openings 9 and outflow openings 10 are tube stubs 11, 12 respectively to which connecting hoses 13 and outlet hoses 14 are respectively connected. At the position of the connection between connecting hoses 13 and supply tube 6 are arranged control closing valves 15 with which the supply of medium to a distributing member 8 can be controlled. The operating width can thus be adjusted, for instance when only a narrow strip of ground needs manuring. Determined distributing members 8 can thus also be switched on or off earlier or later, whereby fields with oblique headlands can also be worked.

The outer distributing members 8 are mutually connected at their ends 19, for instance by means of threaded sleeves 35. As indicated schematically at 20, central supply member 6 takes a pivotable form at different locations, and the inner distributing members 8 are not connected to each other, whereby discharge apparatus 5 can be folded along container 2 for the purpose of transporting the installation by road.

Received in each distributing member 8 is a closing member 16 which is movable relative to distributing member 8. In the shown embodiment each distributing member 8 and each closing member 16 is embodied as cylindrical tube, and closing member 16 is rotatable in each case relative to distributing member 8 (fig. 2). In each closing member 16 are arranged dispensing openings 17 which correspond to the outflow openings 10 of distributing member 8. When closing member 16 is rotated, these dispensing openings 17 are brought into register with outflow openings 10 and medium can flow out of distributing member 8. In the shown embodiment the outflow openings 10 are round and dispensing openings 17 have a form which has a throughflow area changing in the direction of movement, here a type of droplet form.

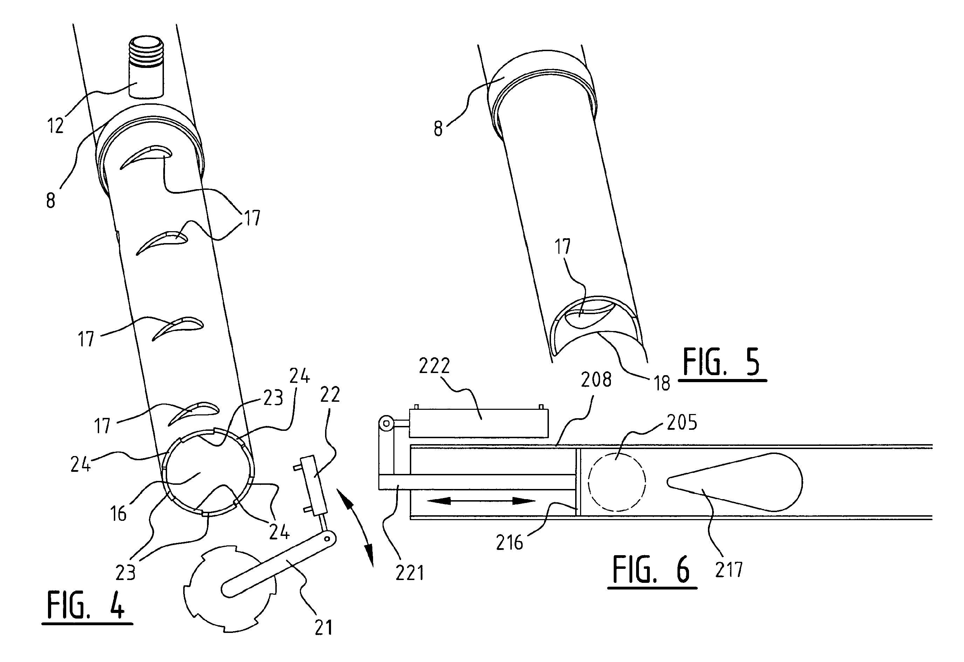

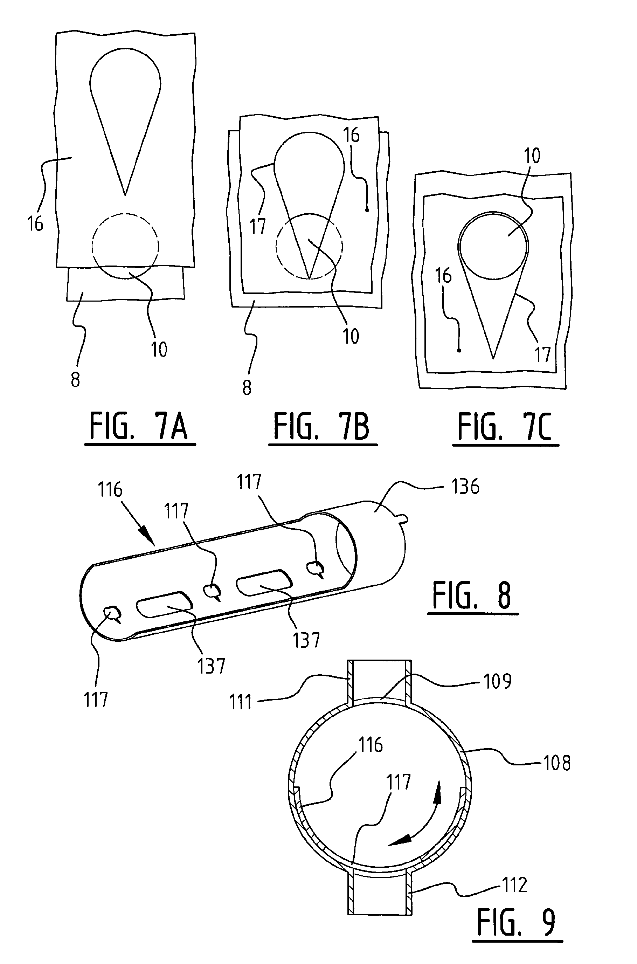

Each closing member 16 is rotated relative to distributing member 8 by means of an operating member 21, for instance an arm which protrudes from distributing member 8 and which co-acts with a pneumatic cylinder 22 (fig. 4). A rotating drive engaging directly on closing member 16 can however also be envisaged. In order to enable non-rotating connection of closing member 16 to operating member 21, the closing member is provided on its outer end with a pattern of protrusions 23 and recesses 24 which can co-act with a correspondingly formed part of operating member 21. Closing member 16 can be moved between an (open) position leaving outflow openings 10 wholly clear (fig. 7C) and a (closed) position completely blocking these outflow openings 10 (fig. 7A), although it is also possible for closing member 16 to be placed in an intermediate position in which outflow openings 10 are thus partially opened (fig. 7B).

At the position of inflow opening 9 of distributing member 8 the closing member 16 has a recess 18 such that inflow opening 9 is substantially fully opened in any position of closing member 16. In the shown embodiment closing member 16 is rotatable and recess 18 therefore extends over a relatively large part of the periphery of closing member 16 (fig. 5). This ensures that distributing member 8 always remains filled with medium, even when outflow openings 10 are closed, whereby delivery begins immediately as soon as outflow openings 10 are opened again.

In an alternative embodiment of discharge apparatus 105 closing members 116 are not wholly tubular but are embodied as half-tubes (fig. 8, 9). This has the advantage that the material consumption is halved, since two closing members 116 can now be formed from a single tube. This is important because, just as distributing members 108, closing members 116 will be manufactured in practice from relatively high-grade material such as stainless steel, this in respect of the aggressive nature of the medium for discharge, manure. Each closing member 116 is however wholly cylindrical at one of its ends 136 so that it there has sufficient strength and rigidity for transmission of operating forces. Closing members 116 are here otherwise also provided with holes 137 which make the members lighter, while dispensing openings 117 no longer take a droplet-like form but rather a keyhole form in order to enable more precise adjustment of the dispensing of small quantities. In this variant a separate recess is of course no longer necessary at the position of inflow opening 109.

In yet another variant closing member 216 is non-rotatable, but is embodied instead for sliding in lengthwise direction of distributing member 208 (fig. 6). Use can then again be made for operation of a - now L-shaped - arm 221 which is driven by a pneumatic cylinder 222. In that case the recess 218 (not shown here) at the position of inflow opening 209 will thus take an elongate form in order to keep inflow opening 209 open under all conditions.

With the discharge apparatus as described above a medium displaceable by a pump, such as liquid manure, can be discharged in simple and uniformly distributed manner over a large width. In the shown embodiment an operational width of 18 metres can be created using five centrally placed distributing members 8, each 3 metres in length, and two distributing members 8, each 1.5 metres in length, on the two ends of discharge apparatus 5.

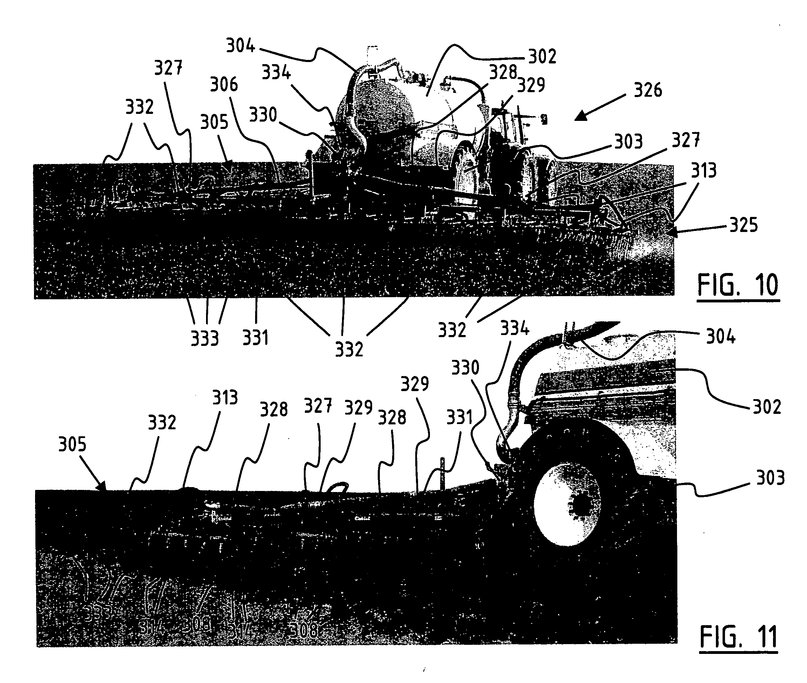

In order to work the discharged manure as quickly as possible into the ground, and thus prevent stench nuisance, yet another embodiment of discharge apparatus 305 is combined with a ground working apparatus 325, in this case a so-called weeder harrow (fig. 10). This weeder harrow 325, which can be of conventional construction, is coupled to mobile container 302 which is in turn pulled by a conventional agricultural tractor 326. A suitable weeder harrow for this purpose is marketed by the firm Einböck of A-4751 Dorf an der Pram, Austria under the name Aerostar.

In this embodiment the discharge apparatus 305 does not have to be self-supporting. This means that the central supply member 306 can be embodied flexibly in the form of a hose. In the shown embodiment this hose has a constant diameter along its full length. Controllable valves 327 are arranged in the hose so as to ensure a uniform and/or targeted distribution of the manure in width direction of discharge apparatus 305. In the shown embodiment the hose is formed by a number of segments 328 connected by couplings 329, 330. The central coupling 330 is mounted on the frame of weeder harrow 325 and is embodied as T-piece for the purpose of connecting central supply member 306 to the feed conduit 304 from container 302. A pump 334 is further arranged therebetween.

Couplings 329 are also embodied as T-pieces to which are connected the connecting rods 313 to distributing members 508. In this embodiment the distributing members 308 are suspended on the front side of the frame of weeder harrow 325. This frame takes a divided form and here has two arms 331, each bearing four sub-frames 332 from which a large number of tines 333 are suspended. Distributing members 308 are dimensioned such that their length corresponds in each case to the width of sub-frame 332 from which they are suspended (fig. 11).

Using this variant of discharge apparatus 305 manure can thus be spread in a single operation over the ground through hoses 314, and then be worked immediately into the upper layer of the ground by tines 333.

Although the invention has been described above on the basis of a number of examples, it is not limited thereto. The distributing members and closing members could thus be of different form, and the number of inflow openings, outflow openings and dispensing openings and the form thereof can be varied. In addition, the closing members could also be arranged on the outside of the distributing members.

The scope of the invention is therefore defined solely by the now following claims.

## Claims

1. Apparatus for distributed discharge of a medium displaceable by a pump, in particular liquid manure, from a container filled with this medium, **characterized by** at least one tubular distributing member which is to be connected to the container and which has at least one inflow opening and a number of outflow openings distributed in its lengthwise direction, and at least one movable member co-acting with the distributing member for at least partially closing one or more outflow openings.

2. Discharge apparatus as claimed in claim 1, **characterized in that** the closing member has a cross-sectional form at least partially corresponding to that of the distributing member, is arranged co-axially in or round a part of the distributing member, and has at least one dispensing opening for bringing into register with one or more outflow openings.

3. Discharge apparatus as claimed in claim 2, **characterized in that** the distributing member has a circular cross-section, and the cross-section of the closing member forms at least a circle segment.

4. Discharge apparatus as claimed in claim 3, **characterized in that** the closing member likewise has a circular cross-section.

5. Discharge apparatus as claimed in claim 3, **characterized in that** the closing member has a semi-circular cross-section.

6. Discharge apparatus as claimed in any of the claims 3-5, **characterized in that** the closing member is pivotable relative to the distributing member about their common longitudinal axis.

7. Discharge apparatus as claimed in any of the claims 2-6, **characterized in that** the closing member is slidable relative to the distributing member along their common longitudinal axis.

8. Discharge apparatus as claimed in any of the claims 2-6, **characterized in that** the dispensing opening(s) and/or the outflow openings has/have a throughflow area changing in the direction of movement of the closing member.

9. Discharge apparatus as claimed in claim 8, **characterized in that** the dispensing opening(s) and/or the outflow openings has/have a substantially droplet-shaped form.

10. Discharge apparatus as claimed in any of the foregoing claims, **characterized in that** the closing member has a recess at the position of the inflow opening such that the inflow opening is substantially fully opened in any position of the closing member.

11. Discharge apparatus as claimed in any of the foregoing claims, **characterized by** a number of distributing members which can each be connected to the container.

12. Discharge apparatus as claimed in claim 11, **characterized by** a central supply member connected to the distributing members and to be connected to the container.

13. Discharge apparatus as claimed in claim 12, **characterized in that** controllable valves are arranged between the central supply member and at least some of the distributing members.

14. Discharge apparatus as claimed in claim 12 or 13, **characterized in that** the central supply member is elongate and the distributing members extend substantially parallel to the central supply member.

15. Discharge apparatus as claimed in any of the claims 12-14, **characterized in that** the central supply member takes the form of a tube with an internal diameter decreasing toward its ends.

16. Discharge apparatus as claimed in claim 15, **characterized in that** each distributing member has two ends, and the ends of adjacent distributing members are connected fixedly to each other.

17. Discharge apparatus as claimed in claim 15 or 16, **characterized in that** the tube forming the central supply member and at least some of the distributing members are pivotable.

18. Discharge devised as claimed in claim 11 or 12, **characterized in that** the distributing members and/or the central supply member are/is suspended on a device for working the ground to be connected to the container.

19. Discharge apparatus as claimed in claim 18, **characterized in that** the ground working apparatus is a weeder harrow.

20. Discharge apparatus as claimed in claim 18 or 19, **characterized in that** the central supply member takes the form of a hose with at least one controllable valve accommodated between the middle and each end thereof.

21. Discharge apparatus as claimed in claim 20, **characterized in that** the hose is assembled from a number of mutually coupled segments, and a connection to one of the distributing members is formed at the position of each coupling.

22. Installation for distributed discharge of a medium displaceable by a pump, in particular liquid manure, comprising a mobile container arranged on a chassis and a discharge apparatus as claimed in any of the foregoing claims connected thereto.
